# EUROPEAN PATENT APPLICATION

(11) **EP 3 171 004 A1**
(43) Date of publication of application: **24.05.2017**
(21) Application number: 16198378.8
(22) Date of filing: 11.11.2016
(51) Int. Cl.: F02C 9/26, F02C 9/28, F02C 9/20

(54) **METHOD AND SYSTEM FOR IMPROVING PARAMETER MEASUREMENT**

(30) Priority: 17.11.2015 US 201514943429
(71) Applicant: General Electric Company, Schenectady, NY 12345 (US)
(72) Inventor: ADIBHATLA, Sridhar, Cincinnati, OH 45215 (US)
(74) Representative: Williams, Andrew Richard

(57) **Abstract**

Parameter measurement systems including improved sensor calibration are provided herein. The measurement system (150) includes a first sensor (212) with a first output signal (314) including a plurality of output characteristics, at least one output characteristic being deficient for measuring a desired parameter and at least one output characteristic being suitable for measuring the desired parameter. The measurement system (150) also includes a second sensor (222) with a second output signal (324) comprising at least some of the plurality of output characteristics, the at least one deficient characteristic of the first output signal (314) being suitable in the second output signal (324) for measuring the desired parameter. The measurement system (150) further includes a processor (232) programmed to calibrate the first output signal (314) using the second output signal (324) to generate a third output signal (340) including the at least one suitable characteristic of the first output signal (314) and the at least one suitable characteristic of the second output signal (324).

## Description

### BACKGROUND

The field of the disclosure relates generally to parameter measurement systems and, more particularly, to a method and system for improving parameter measurement by leveraging and combining sensor outputs having desired characteristics for measuring a parameter.

At least some sensors are designed to have at least one particular output characteristic, for example, high accuracy or high bandwidth (i.e., high speed or fast response). For example, in at least some aircraft systems, a fuel metering valve (FMV) is used in an engine controller. The FMV includes a fuel actuator sensor with a sensor output having a high bandwidth or fast response characteristic. However, the sensor output from the FMV also includes a low accuracy characteristic, with error of ±5%. Additionally, a fuel flow meter (FFM) includes a sensor configured to provide a signal to the aircraft related to fuel consumption at various stages of flight. The FFM sensor output includes a high accuracy characteristic, with error of ±1% during cruise stages, but also includes a slow response characteristic.

It may be expensive or difficult to design sensors with sensor outputs that combine two desired characteristics and/or to implement more complex hardware designs to reduce effects of low-accuracy sensors. At least some known systems attempt to use closed-loop feedback controls to manipulate sensor output signals from two disparate sensors having different desired output characteristics. However, such systems may be vulnerable to error or compromise when the two signals disagree, as there is no independent parameter to discern which signal to preference.

### BRIEF DESCRIPTION

In one aspect, a measurement system is provided, including a first sensor, a second sensor, and a processor. The first sensor includes a first output signal including a plurality of output characteristics, at least one output characteristic of the plurality of output characteristics being deficient for measuring a desired parameter and at least one output characteristic being suitable for measuring the desired parameter. The second sensor includes a second output signal including at least some of the plurality of output characteristics of the first output signal, the at least one deficient characteristic of the first output signal being suitable in the second output signal for measuring the desired parameter. The processor is communicatively coupled to a memory device, and is programmed to calibrate the first output signal of the first sensor using the second output signal of the second sensor to generate a third output signal comprising the at least one suitable characteristic of the first output signal and the at least one suitable characteristic of the second output signal.

In another aspect, a method for improving sensor accuracy is provided. The method includes receiving a first output signal from a first sensor configured to measure a first parameter, the first output signal characterized as having a relatively high accuracy and a relatively low bandwidth, and receiving a second output signal from a second sensor configured to measure the first parameter, the second output signal characterized as having a relatively high bandwidth and a relatively low accuracy. The method also includes calibrating the second output signal from the second sensor using the first output signal from the first sensor, and generating a third output signal using the calibrated second output signal, the third output signal characterized as having a relatively high accuracy and a relatively high bandwidth for the first parameter.

In yet another aspect, a turbofan engine is provided, the turbofan engine including a core engine including a multistage compressor, a fan powered by a power turbine driven by gas generated in the core engine, a fan bypass duct at least partially surrounding the core engine and the fan, and a flow measurement and control (FMC) system. The FMC system includes a first sensor including a first output signal comprising a plurality of output characteristics, at least one output characteristic of the plurality of output characteristics being deficient for measuring a desired parameter and at least one output characteristic being suitable for measuring the desired parameter. The FMC system also includes a second sensor including a second output signal including at least some of the plurality of output characteristics of the first output signal, the at least one deficient characteristic of the first sensor being suitable in the second sensor for measuring the desired parameter. The FMC system further includes a controller configured to control actuation of a fuel meter valve (FMV) to control flow of fuel to the core engine. The controller includes a processor communicatively coupled to a memory device, the processor programmed to calibrate the first output signal of the first sensor using the second output signal of the second sensor to generate a third output signal including the at least one suitable characteristic of the first output signal and the at least one suitable characteristic of the second output signal.

### DRAWINGS

These and other features, aspects, and advantages of the present disclosure will become better understood when the following detailed description is read with reference to the accompanying drawings in which like characters represent like parts throughout the drawings, wherein:
FIG. 1 shows a cross-sectional view of an exemplary turbine engine assembly including a flow measurement and control (FMC) system.
FIG. 2 is a schematic block diagram of the FMC system 150 of the engine assembly shown in FIG. 1, including a controller.
FIG. 3 is a block diagram illustrating a first example embodiment of a calibration model that may be implemented by the controller shown in FIG. 2.
FIG. 4 is a block diagram illustrating a second example embodiment of a calibration model that may be implemented by the controller shown in FIG. 2.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a," "an," and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise.

Embodiments of the parameter measurement systems described herein provide a cost-effective method for leveraging sensor output from existing sensor in any control system to produce a combined sensor output having desired output characteristics from disparate sensors. More specifically, the parameter measurement systems include a first sensor including a first output signal having a plurality of output characteristics, wherein at least one of the output characteristics is deficient for measuring a desired parameter, such as flow, temperature, pressure, etc., and one of the output characteristics is suitable for measuring the desired parameter. The parameter measurement systems further include a second sensor including a second output signal that may have some of the same output characteristics, but includes output characteristics, which were deficient in the output signal from the first sensor, that are suitable for measuring the desired parameter. The system further include a processor configured to calibrate the first signal using the second signal to generate a third (calibrated) signal having the suitable characteristics from both the first and second output signals of the first and second sensors. As used herein, "suitable" refers generally to a beneficial or desired characteristic for measuring the desired parameter, and "deficient" refers generally to an undesirable or negative characteristic for measuring the desired parameter. Accordingly, certain characteristics may be suitable for measuring one parameter but deficient for measuring a different parameter. The parameter measurement systems facilitate development of a calibration model that is implemented and refined to optimize the combined sensor output according to the application thereof and to facilitate operability of the system in the event of a loss of one of the sensor output signals, thereby facilitating robustness of the system.

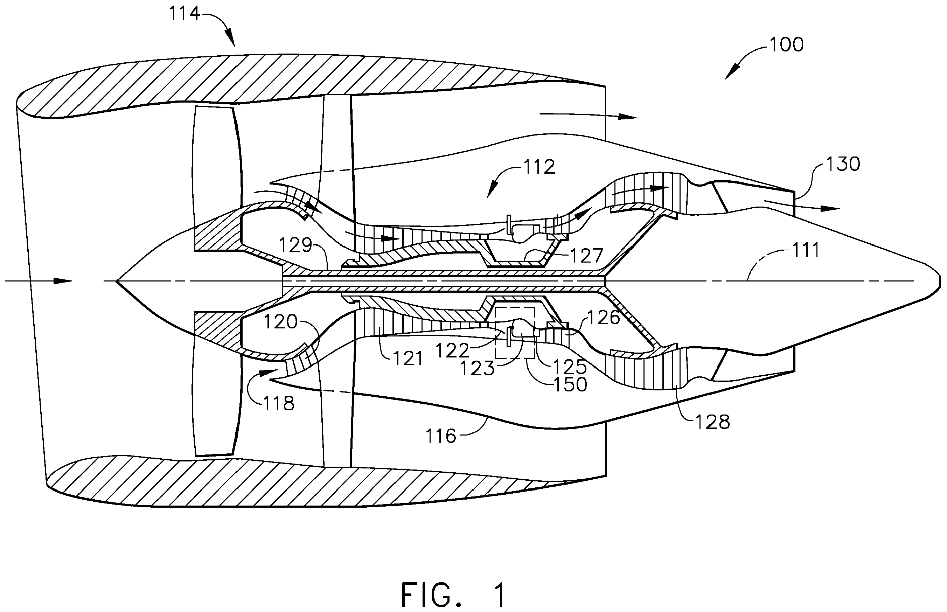

FIG. 1 shows a cross-sectional view of an exemplary turbine engine assembly 100 having a longitudinal or centerline axis 111 therethrough. Although FIG. 1 shows a turbine engine assembly for use in an aircraft, engine assembly 100 is any turbine engine that facilitates operation as described herein, such as, but not limited to, a ground-based gas turbine engine assembly. Engine assembly 100 includes a core turbine engine 112 and a fan section 114 positioned upstream of core turbine engine 112. Core engine 112 includes a generally tubular outer casing 116 that defines an annular inlet 118. Outer casing 116 further encloses and supports a booster compressor 120 for raising the pressure of air entering core engine 112. A multi-stage, axial-flow high pressure compressor 121 receives pressurized air from booster compressor 120 and further increases the pressure of the air. The pressurized air flows to a combustor 122, generally defined by a combustion liner 123, where fuel is injected into the pressurized air stream via one or more fuel nozzles 125 to raise the temperature and energy level of the pressurized air. A flow measurement and control (FMC) system 150 is positioned upstream of fuel nozzle(s) 125 and is configured to control the flow of fuel through fuel nozzle(s) 125. The high energy combustion products flow from combustor 122 to a first (high pressure) turbine 126 for driving compressor 121 through a first (high pressure) drive shaft 127, and then to a second (low pressure) turbine 128 for driving booster compressor 120 and fan section 114 through a second (low pressure) drive shaft 129 that is coaxial with first drive shaft 127. After driving each of turbines 126 and 128, the combustion products leave core engine 112 through an exhaust nozzle 130 to provide propulsive jet thrust.

In at least some known aircraft systems, under normal operation, the fuel control system accuracy is in the range of about 4-6% error, for example, due to unit to unit variations in fuel metering valves, fuel temperature, and specific gravity effects. This impacts an engine operability margin for compressor stall or combustor lean blowout conditions.

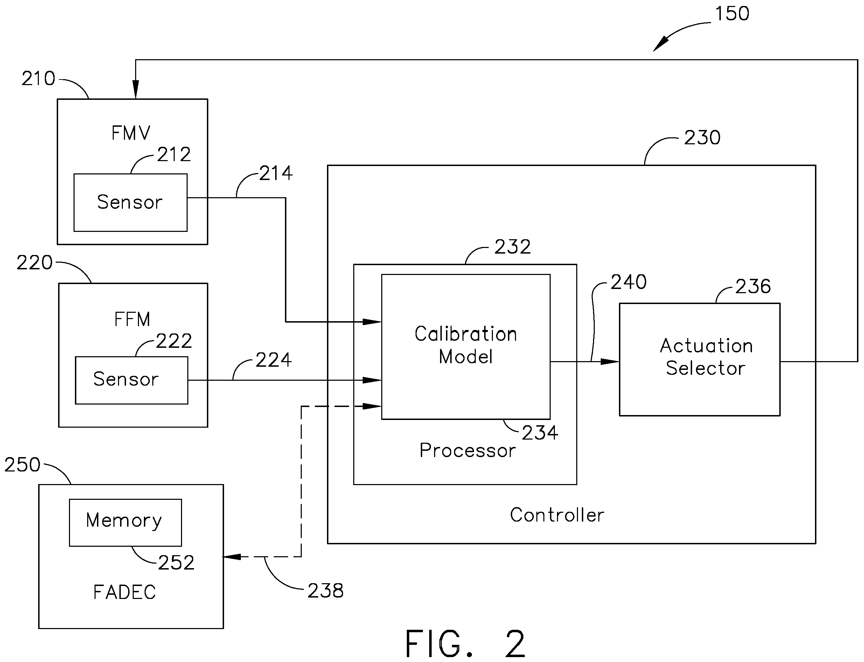

FIG. 2 is a schematic block diagram of flow measurement and control (FMC) system 150 of engine assembly 100 (both shown in FIG. 1). FMC system 150 is one example embodiment of a parameter measurement system as described herein, and should not be construed to limit the applications of the present disclosure in any way. FMC system 150 includes a fuel metering valve (FMV) 210, a fuel flow meter (FFM) 220, and a controller 230. Controller 230 is configured to control actuation of FMV 210 (e.g., using a torque motor, not shown) to control fuel flow through nozzle 125 into combustor 120 (both shown in FIG. 1). Controller 230 receives input signals from various components of FMC system 150 to select appropriate FMV 210 actuation. To select appropriate FMV 210 actuation, controller includes a processor 232 configured to implement a calibration model 234 that calibrates signals input thereto, as described further herein, and outputs a calibrated signal to an actuation selector 236.

FMV 210 includes at least one FMV sensor 212 (e.g., a linear variable differential transformer (LVDT)), configured to sense a fluid pressure of fuel through FMV 210, which produces an FMV sensor output signal 214 having output characteristics. Specifically, FMV sensor output signal 214 includes low accuracy and high bandwidth (i.e., fast response) output characteristics.

FFM 220 includes an FFM sensor 222, configured to sense a mass flow of fuel to estimate fuel consumption by core engine 112 (shown in FIG. 1), which produces an FFM sensor output signal 224 having output characteristics. Specifically, FFM sensor output signal 224 includes high accuracy and low bandwidth (i.e., slow response) characteristics. FFM sensor output signal 224 includes steady state (e.g., cruise) accuracy of about 1-3% error. However, FFM sensor output signal 224 is not appropriate for direct input to actuation selector 236 due to its slow response characteristic.

In addition, FMC system 150 includes and/or is in communication with a full authority digital engine control (FADEC) 250 computer system. FADEC 250 includes a nonvolatile memory 252.

In the example embodiment, FMV sensor output signal 214 is calibrated during aircraft cruise using FFM sensor output signal 224, thereby producing a calibrated FMV output signal 240. In the example embodiment, controller 230 substantially continuously calibrates FMV sensor output signal 214 during cruise operation of FMC system 150 using calibration model 234. Accordingly, calibration model 234 may be refined continuously or at regular intervals, such that calibration model 234 is up to date. Data associated with calibration model 234 ("calibration data" 238) and/or instructions for implementing calibration model 234 may be stored in memory 252. In the event of FFM 220 and/or FFM sensor 222 failure or other loss of FFM sensor output signal 224 as input to the controller 230, which may otherwise lead to loss of engine performance or operability margin, calibration data 238 is retrieved from memory 252 to facilitate continued implementation of calibration model 234. Accordingly, continued input of calibrated FMV output signal 240 to actuation selector 236 may be facilitated, for example, until FFM sensor 222 is replaced. Calibrated FMV output signal 240 includes a high-accuracy response characteristic, with an accuracy of about 1% error, based on the calibration using FFM sensor output signal 224, as well a fast response characteristic from (original, uncalibrated) FMV sensor output signal 214, with a bandwidth of 10+ Hz. Accordingly, in some embodiments, calibrated FMV output signal 240 may provide a back-up control signal to the aircraft in the event of FFM 220 failure.

In alternative embodiments, controller 230 receives inputs from additional components (not shown), such as a fuel nozzle manifold pressure sensor and/or temperature sensor. These inputs may function as supplementary calibration signals for FMV sensor output signal 214 and/or back-up signals for calibrated FMV output signal 240, for example, during non-steady state stage of flight (e.g., takeoff), when the slow response characteristic of FFM sensor output signal 224 may render FFM sensor output signal 224 less useful as a calibration signal. Calibrated FMV output signal 240 may therefore have an accuracy of about 2-3% error, for example, during non-steady state conditions (e.g., due to fuel nozzle variation & pressure signal tolerance).

In some embodiments, calibration model 234 may implement performance of a quasi-state state compensation using the FFM sensor output signal 224 to refine the accuracy of pressure estimations, such as pressure change or delta-p estimations, or temperature estimations, such as turbine inlet temperature, from (original, uncalibrated) FMV sensor output signal 214. Refinement of calibration model 234 (e.g., by substantially continuous operation during steady states) not only facilitates improved estimation of the actual fuel flow into core engine 112 using calibrated FMV output signal 240 but also facilitates providing an improved transient fuel flow signal to other control or monitoring systems (e.g., to a cockpit for display to a pilot of an aircraft). Therefore, improved actuation of FMV 210 by controller 230 is facilitated, reducing margins and increasing fuel efficiency and performance of core engine 112. Additionally, operability margins (e.g., reducing stall, blowout, thrust transient times, start times) of core engine 112 may be improved. Reducing thrust transient times (during which fuel flow may be rapidly reduced) and improving delta-p estimations may further facilitate preventing low-pressure turbine 128 shaft speed droop. As calibration model 234 is refined, controller 230 (e.g., using processor 232) may detect rapid or unexpected changes in FMV sensor output signal 214, which may signal mechanical failures, and controller 230 may facilitate limiting potential for engine overspeed (and potential aircraft thrust control malfunction events), for example, by facilitating actions such as closure of compressor 121 stator vanes. In addition, calibration model 234 facilitates tracking or monitoring (e.g., using processor 232) of nozzle 125 health over time, which may provide earlier indication of nozzle 125 clogging or other degradation.

Notably, FMC system 150 described herein functions using existing sensors 212, 222 in engine assembly 100, i.e., without the need (nor, therefore, the expense) for any additional sensors. Moreover, as FMC system 150 functions with existing sensors 212, 222, FMC system 150 may be implemented on many types of aircraft engines and/or other engine systems (not shown). It should be understood that the present disclosure is not limited to the embodiments specifically described herein, but that the teachings herein may be applicable to additional sensor systems, including pressure sensor systems, temperature sensor system, and any other sensor systems having more than one sensor with output signals having different desired characteristics.

For example, in an alternative embodiment, a pressure control system implemented in an aircraft system includes two pressure sensors, a high-range pressure sensor and a low-range pressure sensor. The low-range pressure sensor produces a low-range output signal having over-pressure protection and a high-accuracy output signal characteristic (about 0.5% error) at low pressure. The high-range pressure sensor produces a high range output signal having high accuracy in high pressure conditions but low accuracy output characteristics in low pressure conditions. Similar to the calibration of FMV sensor output signal 214 described above, the low-range output signal is used to calibrate the high-range output signal during operation of the pressure control system using a calibration model. The calibration model is stored in a memory for later retrieval, for example, upon loss of the low-range output signal.

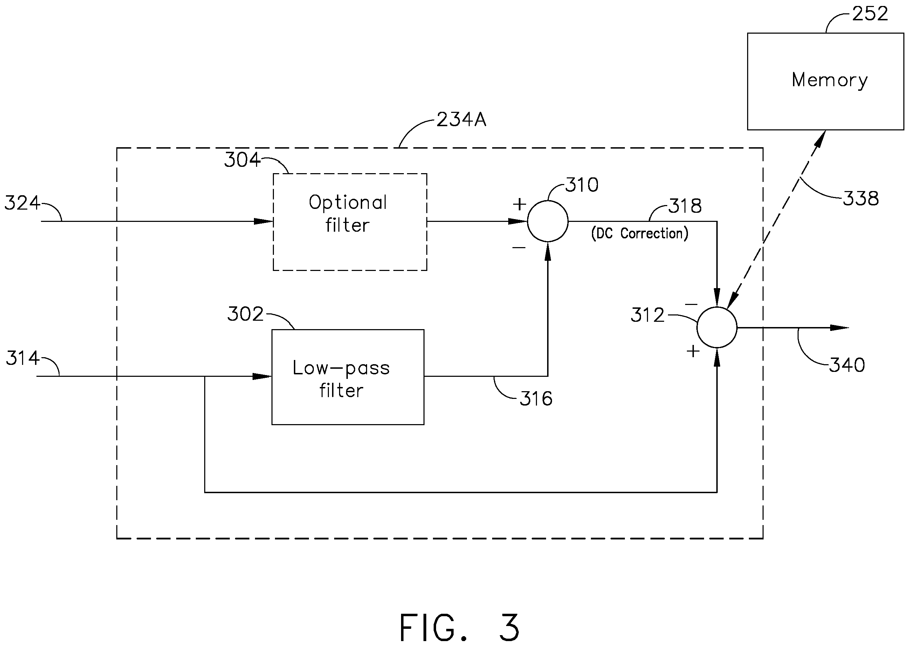

FIG. 3 is a block diagram illustrating a second example embodiment of calibration model 234 of controller 230 (both shown in FIG. 2). Accordingly, calibration model 234 is referred to, with respect to the illustrated embodiment of FIG. 3, as calibration model 234A. Calibration model 234A is applicable to any number of parameter measurement systems, not only the illustrated embodiment of the flow measurement and control (FMC) system 150 of FIG. 2. In the illustrated embodiment, calibration model 234A includes at least one filter 302, 304 and at least one summing junction 310, 312. More specifically, calibration model 234A includes low-pass filter 302 configured to pass a low-bandwidth signal and optional filter 304, as will be described further herein. Calibration model 234A is configured to receive first sensor output signal 314 and second sensor output signal 324 as input signals. First sensor output signal 314 includes a plurality of output characteristics, one or more of which are deficient for measuring a desired parameter, and one or more of which are suitable for measuring the desired parameter. For example, first sensor output signal 314 may have high-bandwidth (i.e., fast response) and low accuracy (e.g., about 5% error) characteristics. In one embodiment, first sensor output signal 314 includes FMV sensor output signal 214 (shown in FIG. 2). First sensor output signal 314 may be passed through low-pass filter 302, which is configured to output a first filtered signal 316 having a low bandwidth characteristic representative of a steady-state (e.g., DC) portion of first sensor output signal 314. Hence, low-pass filter 302 may be replaced by a steady-state detection algorithm. For example, the steady-state detection algorithm may be configured to detect changes over a predetermined period, or rates of change, in rotor speeds or fuel flow and identify a "steady state" (or pseudo-steady state) when such changes are below a threshold value.

Second sensor output signal 324 includes a plurality of output characteristics, one or more of which are deficient for measuring a desired parameter, and one or more of which are suitable for measuring the desired parameter. For example, second sensor output signal 324 may have low bandwidth (i.e., slow response) and high accuracy (e.g., about 1% error) characteristics. In one embodiment, second sensor output signal 324 includes FFM sensor output signal 224 (shown in FIG. 2). Second sensor output signal 324 may be passed through optional filter 304, which may include a filter to remove noise from second sensor output signal 324. Second sensor output signal 324 may alternatively be passed directly to first summing junction 310. First summing junction 310 performs DC (steady-state) correction on first sensor output signal 314 by subtracting first filtered signal 316 from second sensor output signal 324, which leaves only stead-state corrections in a DC correction signal 318. DC correction in DC correction signal 318, output from first summing junction 310, is passed to second summing junction 312. Second summing junction 312 is configured to calibrate first sensor output signal 314 using DC correction signal 318, which forces a steady-state match between first sensor output signal 314 and second sensor output signal 324. Second summing junction 312 outputs calibrated signal 340 (corresponding to calibrated FMV output signal 240, shown in FIG. 2) having both the desired characteristic(s) of first sensor output signal 314 and second sensor output signal 324. For example, in one embodiment, calibrated signal 340 includes high-accuracy and high-bandwidth characteristics, and is output to actuation selector 236 (shown in FIG. 2). Second summing junction 312 is configured to output data representative of the calibration ("calibration data" 338) to memory 252 (shown in FIG. 2) for storage and/or refinement of calibration model 234A. In the event of loss of second sensor output signal 324, second summing junction 312 is configured to use retrieved calibration data 338 to maintain calibration of first sensor output signal 314.

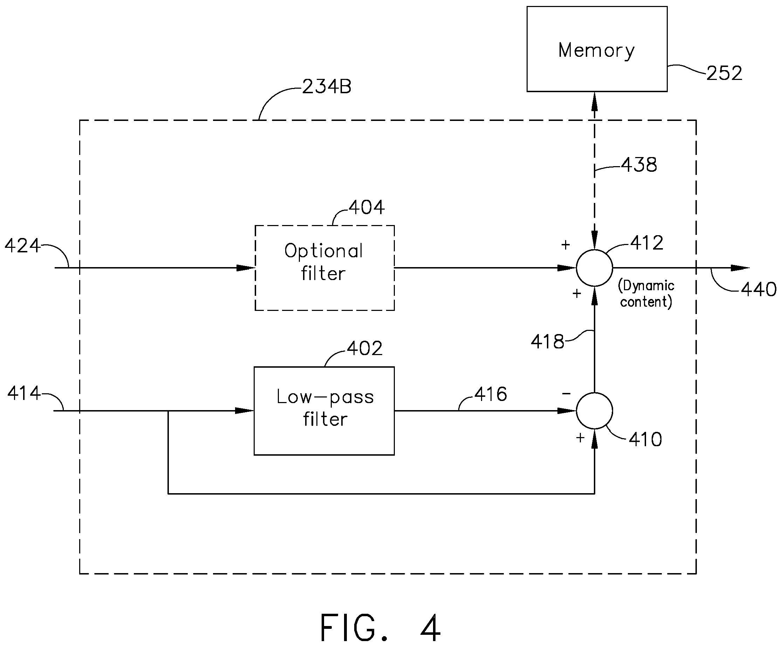

FIG. 4 is a block diagram illustrating a first example embodiment of calibration model 234 of controller 230 (both shown in FIG. 2). Accordingly, calibration model 234 is referred to, with respect to the illustrated embodiment of FIG. 4, as calibration model 234B. Calibration model 234B is applicable to any number of parameter measurement systems, not only the illustrated embodiment of flow measurement and control (FMC) system 150 of FIG. 2. In the illustrated embodiment, calibration model 234B includes at least one filter 402, 404 and at least one summing junction 410, 412. More specifically, calibration model 234B includes low-pass filter 402 configured to pass a low-bandwidth signal and optional filter 404, as described further herein. In an alternate embodiment, low-pass filter 402 may be replaced by a steady-state detection algorithm. Calibration model 234B is configured to receive first sensor output signal 414 and second sensor output signal 424 as input signals. First sensor output signal 414 includes a plurality of output characteristics, one or more of which are deficient for measuring a desired parameter, and one or more of which are suitable for measuring the desired parameter. For example, first sensor output signal 414 may have high-bandwidth (i.e., fast response) and low accuracy (e.g., about 5% error) characteristics. In one embodiment, first sensor output signal 414 includes FMV sensor output signal 214 (shown in FIG. 2), and the desired parameter to be measured is fuel flow in core engine 112 (shown in FIG. 1). First sensor output signal 414 may be passed through low-pass filter 402, which is configured to output a first filtered signal 416 having a dynamic, estimated low bandwidth characteristic. First filtered signal 416 provides an estimate of second sensor output signal 424 (e.g., from FFM 220, shown in FIG. 2). First sensor output signal 414 is also passed directly to first summing junction 410, which accordingly is configured to receive first filtered signal 416 and first sensor output signal 414 as input thereto. First summing junction 410 is configured to subtract first filtered signal 416 from first sensor output signal 414 and output a first sum signal 418 indicative of the dynamic content in first sensor output signal 414.

Second sensor output signal 424 includes a plurality of output characteristics, one or more of which are deficient for measuring a desired parameter, and one or more of which are suitable for measuring the desired parameter. For example, second sensor output signal 424 may have low bandwidth (i.e., slow response) and high accuracy (e.g., about 1% error) characteristics. In one embodiment, second sensor output signal 424 includes FFM sensor output signal 224 (shown in FIG. 2). Second sensor output signal 424 may be passed through optional filter 404, which may include a filter to remove noise on second sensor output signal 424. Second sensor output signal 424 may alternatively be passed directly to second summing junction 412. Second summing junction 412 is configured to calibrate second sensor output signal 424 (which corresponds to FFM output sensor signal 224) using the dynamic content from first sensor output signal 414. Second summing junction 412 outputs calibrated signal 440 (corresponding to, in one embodiment, a dynamically corrected FFM output sensor signal 240) having both the desired characteristic(s) of first sensor output signal 414 and second sensor output signal 424. For example, in one embodiment, calibrated signal 440 includes high-accuracy and high-bandwidth characteristics, and is output to actuation selector 236 (shown in FIG. 2). Second summing junction 412 is configured to output data representative of the calibration ("calibration data" 438) to memory 252 (shown in FIG. 2) for storage and/or refinement of calibration model 234B. In the event of loss of second output sensor signal 424, second summing junction 412 is configured to use retrieved calibration data 438 to maintain calibration of first sum signal 418.

The above-described systems provide an efficient method for leveraging suitable characteristics of different sensors to produce a single, calibrated output with each of those suitable characteristics, for example, for measuring a particular parameter. Specifically, the above-described systems includes at least two sensors, each having at least one suitable signal output characteristic, and at least a first sensor of the two sensors having a deficient or ill-suited characteristic for the desired purpose (e.g., measurement of a parameter for use in a control system). A second sensor of the two sensors includes a suitable characteristic that can be used to overcome the deficient characteristic of the first sensor. Therefore, an output signal from the second sensor is used to calibrate the output from the first sensor. A third, calibrated signal is produced, having suitable characteristics from both output signals. This calibrated signal not only is better suited for the desired purpose but the calibration thereof may facilitate using the calibrated signal even in the event of a loss of the sensor output from the second sensor, which improves system robustness. By performing the calibration using a processor-implemented model, the above-described systems may be implemented on new or existing systems, reducing the need for more expensive sensors or hardware work-arounds.

Exemplary embodiments of parameter measurement systems and sensor calibration models are described above in detail. The measurement and calibration systems, and methods of operating such systems and component devices are not limited to the specific embodiments described herein, but rather, components of the systems and/or steps of the methods may be utilized independently and separately from other components and/or steps described herein. Embodiments of the parameter measurement systems and sensor calibration models may be used for a variety of applications, including any system that includes two or more disparate sensors with output signals having different characteristics.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A measurement system comprising:
   a first sensor comprising a first output signal comprising a plurality of output characteristics, at least one output characteristic of said plurality of output characteristics being deficient for measuring a desired parameter and at least one output characteristic being suitable for measuring the desired parameter;
   a second sensor comprising a second output signal comprising at least some of the plurality of output characteristics of said first output signal, the at least one deficient characteristic of said first output signal being suitable in said second output signal for measuring the desired parameter; and
   a processor communicatively coupled to a memory device, said processor programmed to calibrate said first output signal of said first sensor using said second output signal of said second sensor to generate a third output signal comprising the at least one suitable characteristic of said first output signal and the at least one suitable characteristic of said second output signal.
2. The system of clause 1, wherein the desired parameter comprises at least one of a flow, a temperature, and a pressure.
3. The system of clause 1 or 2, wherein at least one of said first and said second sensors are embodied in a virtual sensor.
4. The system of any preceding clause, wherein said plurality of output characteristics includes a sensor bandwidth, a sensor accuracy, a sensor repeatability, a sensor resolution, and a sensor sensitivity.
5. The system of any preceding clause, wherein said first sensor comprises a fuel meter valve (FMV) sensor and said second sensor comprises a fuel flow meter (FFM) sensor.
6. The system of clause 5, wherein the at least one deficient characteristic of said first output signal of said FMV sensor comprises low sensor accuracy and the at least one suitable characteristic comprises high sensor bandwidth.
7. The system of any preceding clause, wherein said processor is further programmed to store calibration data representative of the calibration of said first output signal in the memory device.
8. The system of clause 7, wherein said processor is further programmed to use the calibration data to calibrate said first output signal upon loss of said second output signal from said second sensor.
9. A method for improving sensor accuracy comprising:
   receiving a first output signal from a first sensor configured to measure a first parameter, the first output signal characterized as having a relatively high accuracy and a relatively low bandwidth;
   receiving a second output signal from a second sensor configured to measure the first parameter, the second output signal characterized as having a relatively high bandwidth and a relatively low accuracy;
   calibrating the second output signal from the second sensor using the first output signal from the first sensor; and
   generating a third output signal using the calibrated second output signal, the third output signal characterized as having a relatively high accuracy and a relatively high bandwidth for the first parameter.
10. The method of clause 9, further comprising generating at least one of the first output signal and the second output signal from a virtual sensor configured to receive one or more signals associated with parameters at measured locations to generate an output signal for an unmeasured location.
11. The method of clause 9 or 10, wherein generating at least one of the first output signal and the second output signal from a virtual sensor comprises generating an electronic model of a system that includes at least one of the first sensor and the second sensor and the unmeasured location.
12. The method of any of clauses 9 to 11, wherein calibrating the second output signal from a second sensor using the first output signal from the first sensor further comprises generating at least one of a calibration constant and a calibration curve.
13. The method of clause 12, further comprising storing the at least one of a calibration constant and a calibration curve in a memory device.
14. The method of any of clauses 9 to 13, further comprising calibrating the second output signal using the at least one of a calibration constant and a calibration curve when the first output signal is unavailable.
15. The method of any of clauses 9 to 14, wherein generating at least one of the first output signal and the second output signal from a virtual sensor comprises generating the first output signal from a fuel flow meter (FFM) sensor and the second output signal from a fuel meter valve (FMV) sensor.
16. A turbofan engine comprising:
   a core engine including a multistage compressor;
   a fan powered by a power turbine driven by gas generated in said core engine;
   a fan bypass duct at least partially surrounding said core engine and said fan; and
   a flow measurement and control (FMC) system comprising:
      a first sensor comprising a first output signal comprising a plurality of output characteristics, at least one output characteristic of said plurality of output characteristics being deficient for measuring a desired parameter and at least one output characteristic being suitable for measuring the desired parameter;
      a second sensor comprising a second output signal comprising at least some of said plurality of output characteristics of said first output signal, the at least one deficient characteristic of said first sensor being suitable in said second sensor for measuring the desired parameter; and
      a controller configured to control actuation of a fuel meter valve (FMV) to control flow of fuel to said core engine, said controller comprising a processor communicatively coupled to a memory device, said processor programmed to calibrate said first output signal of said first sensor using said second output signal of said second sensor to generate a third output signal comprising the at least one suitable characteristic of said first output signal and the at least one suitable characteristic of said second output signal.
17. The turbofan engine of clause 16, wherein said first sensor comprises an FMV sensor and said second sensor comprises a fuel flow meter (FFM) sensor.
18. The turbofan engine of clause 17, wherein the at least one deficient characteristic of said first output signal of said FMV sensor comprises low sensor accuracy and the at least one suitable characteristic comprises high sensor bandwidth.
19. The turbofan engine of any of clauses 16 to 18, wherein said processor is further programmed to store calibration data representative of the calibration of said first output signal in the memory device.
20. The turbofan engine of clause 19, wherein said processor is further programmed to retrieve the calibration data from the memory device upon loss of said second output signal from said FFM sensor to maintain calibration of said first output signal from said FMV sensor.

## Claims

1. A measurement system (150) comprising:
a first sensor (212) comprising a first output signal (314) comprising a plurality of output characteristics, at least one output characteristic of said plurality of output characteristics being deficient for measuring a desired parameter and at least one output characteristic being suitable for measuring the desired parameter;
a second sensor (222) comprising a second output signal (324) comprising at least some of the plurality of output characteristics of said first output signal (314), the at least one deficient characteristic of said first output signal (314) being suitable in said second output signal (324) for measuring the desired parameter; and
a processor (232) communicatively coupled to a memory device (252), said processor (232) programmed to calibrate said first output signal (314) of said first sensor (212) using said second output signal (324) of said second sensor (222) to generate a third output signal (340) comprising the at least one suitable characteristic of said first output signal (314) and the at least one suitable characteristic of said second output signal (324).

2. The system (150) of Claim 1, wherein the desired parameter comprises at least one of a flow, a temperature, and a pressure.

3. The system (150) of Claim 1 or 2, wherein said plurality of output characteristics includes a sensor bandwidth, a sensor accuracy, a sensor repeatability, a sensor resolution, and a sensor sensitivity.

4. The system (150) of any preceding claim, wherein said first sensor (212) comprises a fuel meter valve (FMV) sensor (212) and said second sensor (222) comprises a fuel flow meter (FFM) sensor (222), the at least one deficient characteristic of said first output signal (314) of said FMV sensor (212) comprises low sensor accuracy, and the at least one suitable characteristic comprises high sensor bandwidth.

5. The system of any preceding claim, wherein said processor (232) is further programmed to store calibration data (338) representative of the calibration of said first output signal (314) in the memory device (252) and use the calibration data (338) to calibrate said first output (314) signal upon loss of said second output signal (324) from said second sensor (222).

6. A turbofan engine (100) comprising:
a core engine (112) including a multistage compressor (120);
a fan (114) powered by a power turbine (126) driven by gas generated in said core engine (112);
a flow measurement and control (FMC) system (150) comprising:
a first sensor (212) comprising a first output signal (314) comprising a plurality of output characteristics, at least one output characteristic of said plurality of output characteristics being deficient for measuring a desired parameter and at least one output characteristic being suitable for measuring the desired parameter;
a second sensor (222) comprising a second output signal (324) comprising at least some of said plurality of output characteristics of said first output signal (314), the at least one deficient characteristic of said first sensor (212) being suitable in said second sensor (222) for measuring the desired parameter; and
a controller (230) configured to control actuation of a fuel metering valve (FMV) 210 to control flow of fuel to said core engine (112), said controller (230) comprising a processor (232) communicatively coupled to a memory device (252), said processor (232) programmed to calibrate said first output signal (314) of said first sensor (212) using said second output signal (324) of said second sensor (222) to generate a third output signal (340) comprising the at least one suitable characteristic of said first output signal (314) and the at least one suitable characteristic of said second output signal (324).

7. The turbofan engine (100) of Claim 6, wherein said first sensor (212) comprises an FMV sensor (212) and said second sensor (222) comprises a fuel flow meter (FFM) sensor (222).

8. The turbofan engine (100) of Claim 7, wherein the at least one deficient characteristic of said first output signal (314) of said FMV sensor (212) comprises low sensor accuracy and the at least one suitable characteristic comprises high sensor bandwidth.

9. The turbofan engine (100) of any of Claims 6 to 8, wherein said processor (232) is further programmed to store calibration data (338) representative of the calibration of said first output signal (314) in the memory device (252).

10. The turbofan engine (100) of Claim 9, wherein said processor (232) is further programmed to retrieve the calibration data (338) from the memory device (252) upon loss of said second output signal (324) from said FFM sensor (222) to maintain calibration of said first output signal (314) from said FMV sensor (212).

11. A method for improving sensor accuracy comprising:
receiving a first output signal (314) from a first sensor (212) configured to measure a first parameter, the first output signal (314) characterized as having a relatively high accuracy and a relatively low bandwidth;
receiving a second output signal (324) from a second sensor (222) configured to measure the first parameter, the second output signal (324) characterized as having a relatively high bandwidth and a relatively low accuracy;
calibrating the second output signal (324) from the second sensor (222) using the first output signal (314) from the first sensor (212); and
generating a third output signal using the calibrated second output signal, the third output signal characterized as having a relatively high accuracy and a relatively high bandwidth for the first parameter.

12. The method of Claim 11, further comprising generating at least one of the first output signal (314) and the second output signal (324) from a virtual sensor configured to receive one or more signals associated with parameters at measured locations to generate an output signal for an unmeasured location.

13. The method of Claim 11 or 12, wherein calibrating the second output signal from a second sensor (222) using the first output signal from the first sensor (212) further comprises generating at least one of a calibration constant and a calibration curve.

14. The method of Claim 13, further comprising storing the at least one of a calibration constant and a calibration curve in a memory device.

15. The method of any of Claims 11 to 14, wherein generating at least one of the first output signal (314) and the second output signal (324) from a virtual sensor comprises generating the first output signal from a fuel flow meter (FFM) sensor and the second output signal from a fuel meter valve (FMV) sensor.
